# EUROPEAN PATENT APPLICATION

(11) **EP 1 435 550 A1**
(43) Date of publication of application: **07.07.2004**
(21) Application number: 02768130.3
(22) Date of filing: 27.09.2002
(51) Int. Cl.: G05B 19/414, B25J 13/00

(54) **ROBOT CONTROL APPARATUS, ROBOT, AND PRODUCTION FACILITY**

(30) Priority: 28.09.2001 JP 2001301712
(71) Applicant: MATSUSHITA ELECTRIC INDUSTRIAL CO., LTD., Kadoma-shi, Osaka 571-8501 (JP)
(72) Inventor: MORITA, Kunitoshi, Amagasaki-shi, Hyogo 661-0047 (JP); MATSUMOTO, Kazunori, Ibaraki-shi, Osaka 567-0891 (JP)
(74) Representative: Grünecker, Kinkeldey, Stockmair & Schwanhäusser Anwaltssozietät
(86) International application number: PCT/JP2002/010121
(87) International publication number: WO 2003/036399

(57) **Abstract**

A robot control apparatus, with which the limitation due to difference in the input-output mode of peripheral devices is lessened and a robot control system can be structured flexibly. The present robot control apparatus includes a robot arm control unit for controlling action of a robot arm and a sequence controller for controlling an apparatus other than the robot arm. The sequence controller comprises a control section for outputting signals for controlling operation of the apparatus and an input-output section for delivering the signals to the apparatus. The input-output section comprises a dedicated section and a common processing section which transfers signals to the dedicated section. The dedicated section is disposed detachable to the common processing section, and outputs a signal in accordance with a predetermined output mode. Thus the present robot control apparatus can comply with different input-output modes of peripheral facilities forming a robot control system.

## Description

### TECHNICAL FIELD

The present invention relates to a robot control apparatus, a robot and production facilities.

### BACKGROUND ART

A robot is seldom used alone in the practical industrial application. Normally, it is equipped with, for example, a jig for handling works, or a device for transportation, welding, etc., or other types of tools such as a torch, and performs a certain specific task such as machining processing, welding, etc. in a series of production activities. For example, in a series of production activities, a conveyor carries a work to a place to be machined there and then to other place for welding.

In a production process as described above, in order to recognize state of operations being performed by peripheral devices a robot control apparatus gathers data which represents operating status of peripheral devices, via an input-output section of sequence controller.

Now in the following, an input-output section of a conventional robot control system formed of a robot control apparatus and a sequence controller is described.

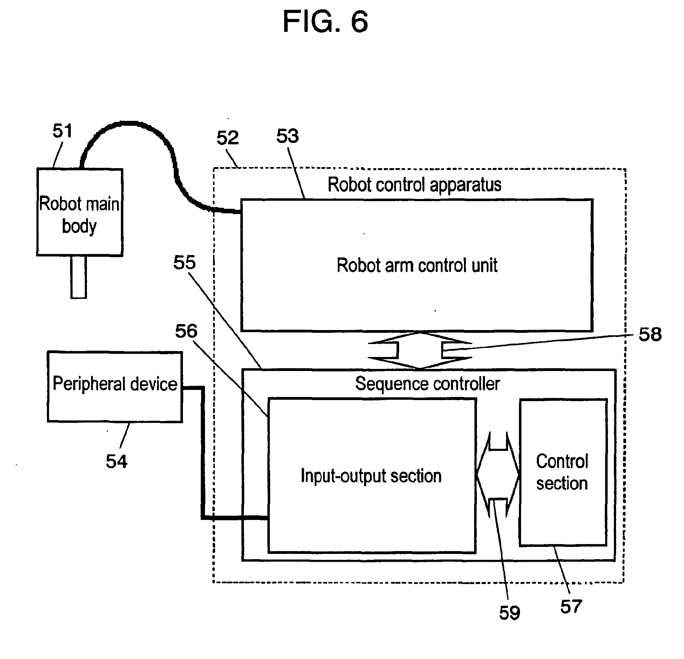

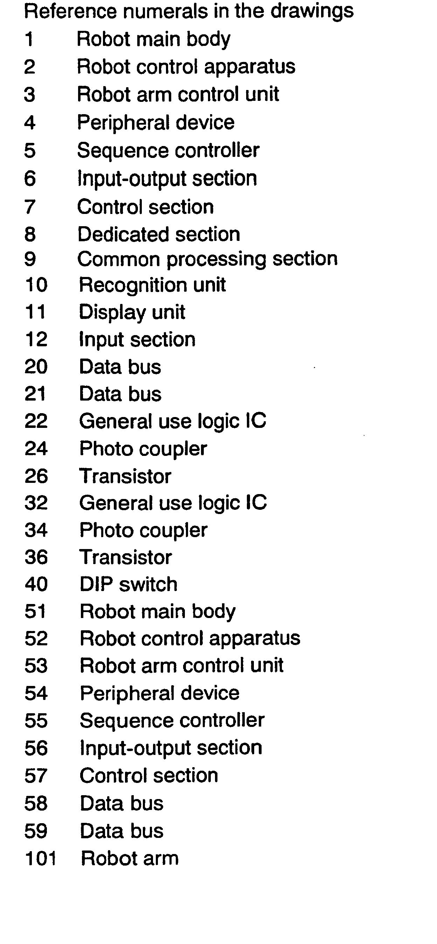

FIG. 6 is a block diagram, showing an exemplary structure of conventional robot control apparatus.

Referring to FIG. 6, robot control apparatus 52 comprises a robot arm control unit 53 and sequence controller 55. Robot arm control unit 53 and sequence controller 55 exchange signals to each other via bus 58.

Robot arm control unit 53 controls robot main body 51.

Sequence controller 55 controls peripheral devices 54 working in collaboration with robot main body 51.

Sequence controller 55 includes control section 57 and input-output section 56. Control section 57 exchanges signals with robot arm control unit 53 via bus 58.

Input-output section 56 receives from peripheral devices 54 signals that represent a state of operation being carried out by peripheral devices 54. Input-output section 56 also outputs and delivers control signals to peripheral devices 54 in accordance with state of operation being performed by robot main body 51.

Control section 57 processes signals from peripheral devices 54 and signals from robot arm control unit 53, and controls input-output section 56 and peripheral devices 54.

Control section 57 and input-output section 56 exchange signals via bus 59.

Input-output section 56 here performs a signal processing in accordance with an input-output mode of peripheral device 54.

In an exemplary case of conventional robot control apparatus as described above, the input-output section of sequence controller is compelled to change the output mode to be compatible with respective input-output modes of peripheral devices, if the peripheral devices constituting a robot control system have different input-output modes.

In other words, when constituting a robot control system, the constituent peripheral devices have to be selected among those which have the same mode of input-output compatible with sequence controller; or, an appropriate sequence controller needs to be provided after confirming the input-output modes of respective peripheral devices.

### DISCLOSURE OF INVENTION

The present invention aims to offer a robot control apparatus.

When structuring a robot control system using a robot and peripheral devices, the present robot control apparatus lessens limitations due to difference in the input-output mode at the apparatus and helps constituting a flexible system. Furthermore, the present robot control apparatus enables to constitute robot control systems with ease by simply applying a minor modification on the robot control apparatus. The present robot control apparatus contains a robot arm control unit for controlling action of a robot arm and a sequence controller for controlling an apparatus other than the robot arm.

The sequence controller comprises a control section for outputting control signals for controlling action of the apparatus and an input-output section for delivering the signals to the apparatus.

The input-output section comprises a dedicated section and a common processing section for sending signals to the dedicated section. The dedicated section is provided detachable to the common processing section, and outputs signal in accordance with a predetermined output mode.

The above-configured robot control apparatus in the present invention is capable of complying with the input-output modes of respective peripheral devices even in a system formed of various peripheral devices having different input-output modes.

A robot control apparatus in the present invention further comprises a display unit coupled therewith, and the dedicated section is provided with a recognition unit which identifies a predetermined input-output mode. An operator can confirm, through the display unit, a relevant input-output mode of a dedicated section being connected with a certain peripheral device. Whether or not the connection is correct can also be confirmed easily.

A robot control apparatus in the present invention having the above configuration is further provided with an input section in the display unit. The input section includes a selector for selecting a certain dedicated section to be used among a plurality of dedicated sections connected. Thus, a dedicated section compatible with the input-output mode of a peripheral device can be selected through the selector of display unit.

Furthermore, a robot control apparatus in the present invention can be used also for a robot which has a robot main body provided with a robot arm.

Furthermore, a robot containing a robot control apparatus in the present invention can be used on a production facility which contains, for example, machining and welding process steps.

### BRIEF DESCRIPTION OF THE DRAWINGS

FIG. 1 shows a structure of robot control system in accordance with a first exemplary embodiment of the present invention.
FIG. 2 is a chart used to describe the first embodiment.
FIG. 3 shows a structure of robot control system in accordance with a second exemplary embodiment of the present invention.
FIG. 4 is a chart used to describe the second embodiment.
FIG. 5 shows a structure of robot control system in accordance with a third exemplary embodiment of the present invention.
FIG. 6 shows an example of conventional robot control system.

### DESCRIPTION OF THE PREFFERED EMBODIMENTS

### (Embodiment 1)

A first exemplary embodiment of the present invention is described below.

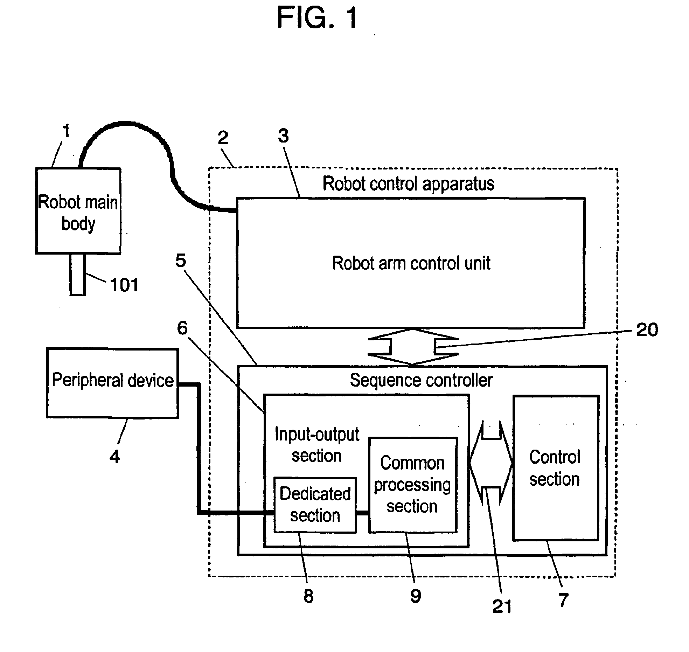

FIG. 1 is a block diagram showing a robot control system formed of a robot, a robot control apparatus and peripheral devices of the robot.

Referring to FIG. 1, robot control apparatus 2 comprises robot arm control unit 3 and sequence controller 5.

Robot arm control unit 3 controls robot main body 1.

Robot main body 1 includes robot arm 101 and a robot arm driving unit (not shown).

Sequence controller 5 controls peripheral devices 4 working in collaboration with robot main body 1.

Robot arm control unit 3 and sequence controller 5 exchange signals via bus 20.

Sequence controller 5 includes input-output section 6 and control section 7.

Control section 7 transmits and receives signals to and from robot arm control unit 53 via bus 20.

Input-output section 6 receives a signal representing the operating status from peripheral device 54, and outputs control signal to peripheral device 4 in accordance with operating status of robot main body 1.

Control section 7 processes signal from peripheral device 4 and signal from robot arm control unit 3, and controls input-output section 6 and peripheral device 4. Control section 7 also reads a program for operating the peripheral devices, and outputs control signal to control operation of peripheral devices.

Control section 7 and input-output section 6 exchange signals via bus 21.

Input-output section 6 includes dedicated section 8 and common processing section 9.

Dedicated section 8 handles the input-output of signals in line with the input-output mode of peripheral device 4.

Common processing section 9 processes information delivered from control section 7 and signal arriving from dedicated section 8.

Herein, dedicated section 8 is provided detachable to common processing section 9.

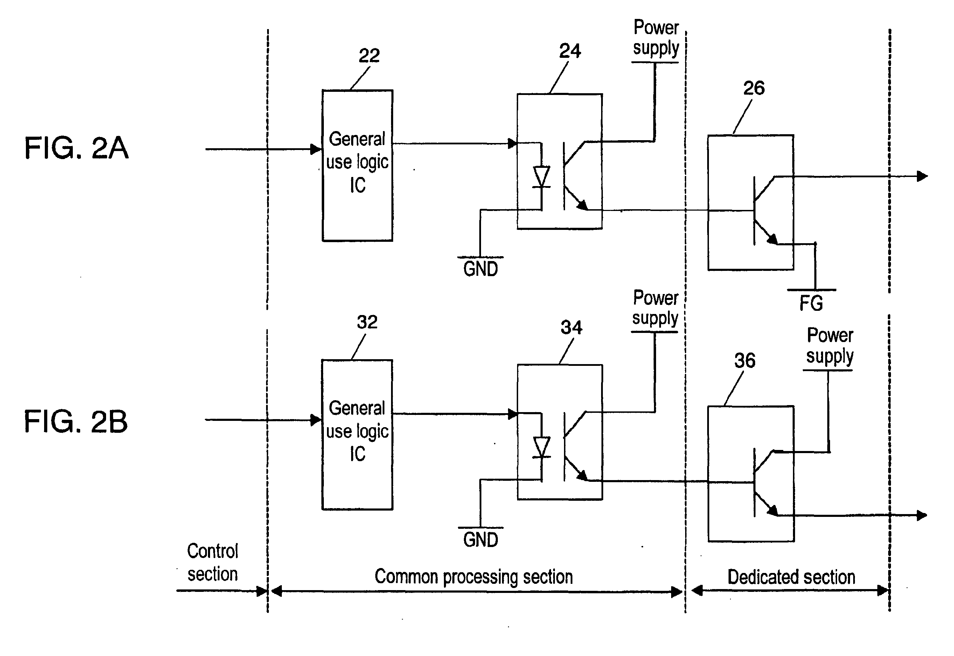

Now the structure of dedicated section 8 and common processing section 9 is described using one exemplary circuit as shown in FIG. 2.

Now a case shown in FIG.2 will be explained.

In a case of FIG. 2A, an output of general use logic IC 22 is led to the anode of a photo diode in photo coupler 24, and the cathode is connected to a ground (GND). The collector of photo transistor in photo coupler 24 is connected to a power source, and the emitter is led to the base of transistor 26. The collector of transistor 26 is treated as the output portion to the outside, while the emitter is connected to the frame GND (FG).

Now a case shown in FIG.2B will be explained.

In a case of FIG. 2B, output of general use logic IC 32 is led to the anode of a photo diode in photo coupler 34, and the cathode is connected to the ground (GND), in the same way as in FIG. 2A. The collector of photo transistor in photo coupler 34 is connected to power source, and the emitter is led to the base of transistor 34. In the case of FIG. 2B, the collector of transistor is connected to power source, and the emitter is treated as output portion to the outside.

In respective cases of the above FIG. 2A and FIG. 2B, a region before the stage of general use logic 22, 23, which region delivering signals to general use logic IC 22, 32, is included in control section 7. A region starting from general use logic IC 22, 32, ending at photo couplers 24, 34 are included in common processing section 9. A region of transistor 26, 36 and thereafter is included in dedicated section 8.

Therefore, an output mode can be modified by only changing dedicated section 8 (or, transistor 26, 36, in the above-described practical example).

So far in the above, an output channel from dedicated section 8 has been described. An input channel can be formed likewise, with flow of the signal reversed.

The above structure is just exemplary. Instead, the common processing section and the dedicated section may be replaced with different circuit schemes for implementing the same objective.

Thus, by connecting a dedicated section to the common processing section in accordance with the input-output mode of a peripheral device, the coupling between a robot control apparatus and the peripheral devices can be implemented easily with only a minimum operation of modification.

### (Embodiment 2)

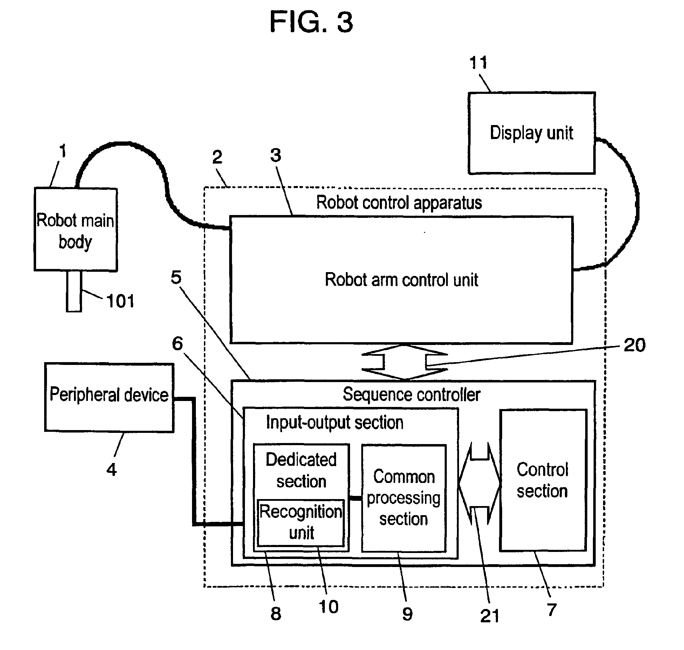

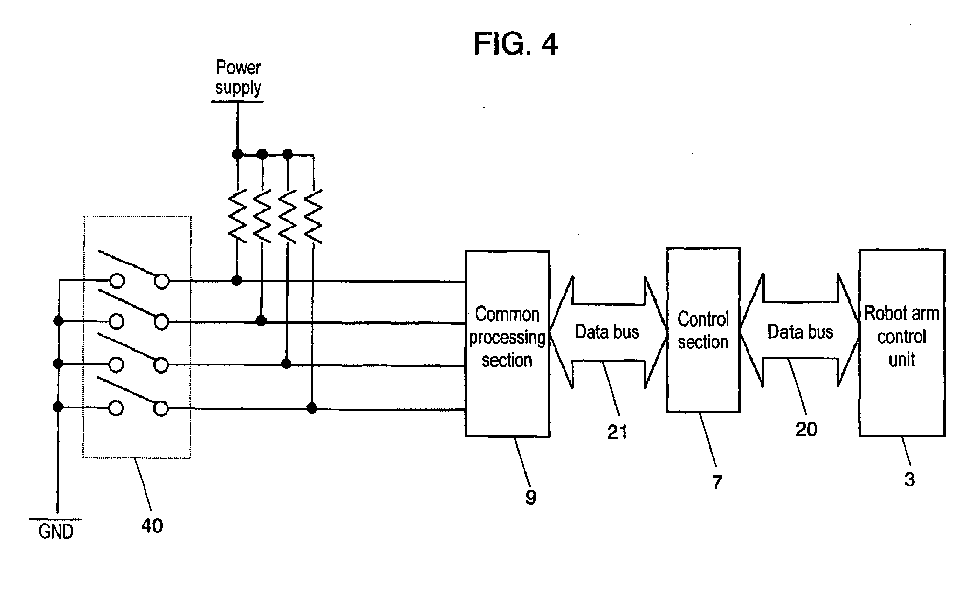

A second exemplary embodiment of the present invention is described referring to FIG. 3 and FIG. 4. Those portions having the same structure as that of the first embodiment are represented by using the same reference numerals, and the description on which portions are omitted.

Referring to FIG. 3, dedicated section 8 is further provided with recognition unit 10. Information recognized at recognition unit 10 is delivered to common processing section 9. The information recognized at recognition unit 10 is delivered also to display unit 11 by way of control section 7, bus line 20 and robot arm control unit 3.

Now, the structure of recognition unit 10 is described.

In an exemplary case as shown in FIG. 4, values representing respective input-output modes corresponding to dedicated sections are preset at DIP switch 40, or the like other means. The preset values are read out to be stored in control section 7 via common processing section 9 and data bus 21.

Data corresponding to a preset value is sent from robot arm control unit 3 to display unit 11 via data bus 20. The data delivered from common processing section 9 may either be parallel or serial.

Respective values preset at DIP switch 40 correspond to predetermined input-output modes of dedicated sections 8. Therefore, control section 7 delivers data of an input-output mode that corresponds to a preset value at DIP switch 40 to display unit 11 to be displayed thereon.

Thus display unit 11 can display an input-output mode of a dedicated section.

A preset value at DIP switch, or at the like means, may further indicate, not only the input-output mode of peripheral device, but a state of peripheral devices connection or types of the peripheral devices, etc.

As described in the above, when a dedicated section is connected with common processing section during an operation of coupling a robot control apparatus with peripheral devices, an operator can confirm on the display unit the input-output mode of the relevant dedicated section being connected to a peripheral device. The display unit also facilitates an easy confirmation that connection of a dedicated section is correct.

### (Embodiment 3)

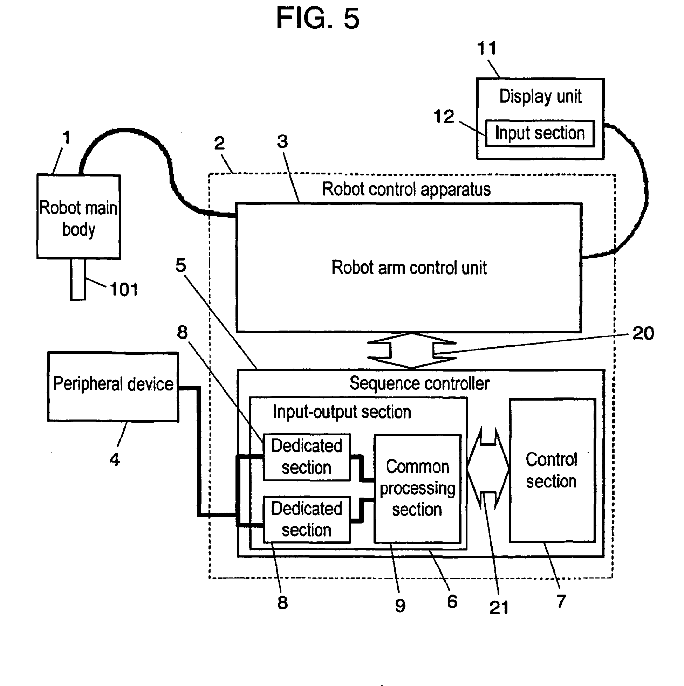

A third exemplary embodiment of the present invention is described with reference to FIG. 5. Those portions having the same structure as that of the first embodiment and the second embodiment are represented by using the same reference numerals, and the description on which portions are omitted.

Referring to FIG. 5, input-output section 6 is provided with a plurality of dedicated sections 8. The plurality of dedicated sections 8 is connected to a common processing section 9. Respective dedicated sections 8 in the present embodiment contain recognition unit 10 shown in FIG. 3. Although dedicated section 8 is shown for two units in FIG. 5, it may be provided for a plurality more than two.

Display unit 11 includes input section 12 for used by an operator.

When coupling peripheral device 4 having a specific input-output mode, an operator uses input section 12 to select a suitable dedicated section compatible with the input-output mode of peripheral device 4. Then, common processing section 9 switches the connection between dedicated sections 8 and control section 7.

The switching at common processing section 9 can be carried out with ease by making use of a general use logic IC.

That is, control section 7 sends a switching signal to common processing section 9 via bus 21, in response to a signal delivered from input section 12 telling to select dedicated section 8. In common processing section 9, a connection between a dedicated section, which inputs/outputs signals of control section 7 for controlling peripheral device 4, and control section 7 is switched by means of a selector which is one of general use logic ICs.

Through a procedure as described above, dedicated section 8 that fits to specific input-output mode of peripheral device 4 is selected from among a plurality of dedicated sections 8 connected with common processing section 5, in accordance with instruction delivered from input section 12 of display unit 11.

Each of the plurality of dedicated sections may be provided with a symbol and the like for recognizing which section is used, so that input section 12 of display unit 11 can select a suitable dedicated section.

Description in the above exemplary embodiments has been based mainly on a robot control apparatus. Robot control apparatus described in the above embodiments can be used for a robot including the robot main body having a robot arm.

Furthermore, a robot containing a robot control apparatus in the above-described embodiment can be used in a production facility which includes a machining process, an welding and the like process steps.

### INDUSTRIAL APPLICABILITY

A robot control apparatus in the present invention can comply with different input-output modes of peripheral devices with less adapting operation. And modifying operation can be implemented easily.

Furthermore, in a robot control apparatus in the present invention, a display unit facilitates an easy recognition of input-output modes, connection status, as well as kinds and relevant information regarding the peripheral devices.

Still further, when coupling a robot control apparatus in the present invention with peripheral devices, an operator can select a suitable dedicated section that fits to the input-output mode of a peripheral device through an input section of display unit. Thus the coupling as well as the change in the coupling with peripheral devices can be implemented easily in a flexible manner.

## Claims

1. A robot control apparatus comprising:
a robot arm control unit for controlling action of a robot arm; and
a sequence controller for controlling an apparatus other than said robot arm, wherein
said sequence controller comprises
a control section for outputting a control signal for controlling said apparatus, and
an input-output section which delivers said signal to said apparatus;
said input-output section comprising a dedicated section and a common processing section for delivering said signal to said dedicated section, said dedicated section being disposed detachable to said common processing section and outputting a signal in accordance with a predetermined output mode.

2. The robot control apparatus of claim 1, further comprising
a display unit coupled with said robot control apparatus, wherein
said dedicated section includes a recognition unit for recognizing kind of a predetermined output mode, and
displays said predetermined output mode on said display unit in accordance with information delivered from said recognition unit.

3. The robot control apparatus of claim 1, further comprising
a display unit coupled with said robot control apparatus, wherein
said display unit is provided with an input section selecting a certain dedicated section to be used among a plurality of said dedicated sections.

4. The robot control apparatus of claim 2, wherein
said display unit is provided with an input section selecting a certain dedicated section to be used among a plurality of said dedicated sections.

5. A robot comprising:
a control unit for controlling action of a robot arm, and
a sequence controller for controlling a apparatus other than said robot arm, wherein
said sequence controller comprises a control section for outputting control a signal for controlling action of said apparatus, and
an input-output section which delivers said signal to said apparatus,
said input-output section comprises a dedicated section and a common processing section for delivering said signal to said dedicated section, and
said dedicated section is disposed detachable to said common processing section and outputting a signal in accordance with a predetermined output mode.

6. The robot of claim 5, further comprising
a display unit coupled with said robot control apparatus, wherein
said dedicated section includes a recognition unit for recognizing kind of a predetermined output mode, and
displays said predetermined output mode on said display unit in accordance with information delivered from said recognition unit.

7. The robot control apparatus of claim 5, further comprising
a display unit coupled with said robot control apparatus, wherein
said display unit is provided with an input section selecting a certain dedicated section to be used among a plurality of said dedicated sections.

8. The robot of claim 6, wherein
said display unit is provided with an input section selects a certain dedicated section to be used among a plurality of said dedicated sections.

9. A production facility containing a robot,
said robot comprising:
a control unit for controlling action of a robot arm; and
a sequence controller for controlling an apparatus other than said robot arm, wherein
said sequence controller comprises
a control section for outputting a signal for controlling said apparatus, and
an input-output section for delivering said signal to said apparatus,
said input-output section comprises a dedicated section and a common processing section for delivering said signal to said dedicated section,
said dedicated section is disposed detachable to said common processing section and outputting a signal in accordance with a predetermined output mode.

10. The production facility of claim 9, said robot further comprising
a display unit coupled with said robot control apparatus, wherein
said dedicated section includes a recognition unit for recognizing kind of a predetermined output mode, and
the kind of said predetermined output mode is displayed on said display unit in accordance with information delivered from said recognition unit.

11. The production facility of claim 9, said robot further comprising
a display unit coupled with said robot control apparatus, wherein
said display unit is provided with an input section which selects a certain dedicated section to be used among a plurality of said dedicated sections.

12. The production facility of claim 10, wherein
said display unit is provided with an input section which selects a certain dedicated section to be used among a plurality of said dedicated sections.
